# EUROPEAN PATENT SPECIFICATION

(11) **EP 1 802 069 B1**
(45) Date of publication and mention of the grant of the patent: **26.03.2008**
(21) Application number: 05028059.3
(22) Date of filing: 21.12.2005
(51) Int. Cl.: H04L 29/06, H04N 7/173

(54) **Method and system for transmitting broadcast related data to a mobile data processing unit**
Verfahren und System zur Übertragung von Broadcast relatierten Daten auf ein mobiles Endgerät
Méthode et système pour transmettre des données, concernant des informations diffusées, vers un terminal mobile

(43) Date of publication of application: 27.06.2007
(73) Proprietor: APS-ASTRA Platform Services GmbH, 85774 Unterföhring (DE)
(72) Inventor: Eich, Jörg, 85435 Erding (DE); Hansen, Jörg, 81669 München (DE); Wiedow, Uwe, 85435 Erding (DE); Kreilein, Max, 80797 München (DE); Urner, Wilfried, 81827 München (DE)
(74) Representative: Wegner, Hans

(56) References cited:
- US-A1- 2003 126 616
- US-A1- 2004 038 692
- US-A1- 2004 049 779

## Description

### 1. Technical field

The present invention relates to methods and devices for transmitting data to a mobile data processing unit.

### 2. The prior art

Mobile data processing units such as hand held computers, PDAs, intelligent mobile telephones, etc. become more and more popular. One reason is that the multimedia capabilities of these devices are constantly increasing. For examples mobile telephones nowadays include a wide variety of functions which exceed the basic necessities of telecommunication.

One additional use of a mobile phone is related to the reception of television signals. More and more broadcasting stations offer added content to be displayed on a mobile phone, which is in one way or the other related to a TV program presently broadcast from the station. The additional content may for example comprise further information concerning a current sports events or the option to download a song, which is presently performed by an artist in a show of the TV program.

In order to transmit the necessary data for the additional content, it is known in the prior art, for example from the WO 2004/088983, the WO 03/088027 and the WO 03/088655, to provide a set top box or the like for receiving digital data, which comprise a convoluted television /audio signal and additional data for the added content. The additional data are separated from the television signal and in a wireless manner, following for example the Bluetooth standard, transmitted from the set top box to a PDA or to a mobile telephone to become accessible to a user.

However, in the mentioned prior art systems the reception of the additional content is limited to users, who receive the TV program with a set top box, which is adapted to retrieve the additional data from the data carousel of the digital television / audio program and to forward it to the mobile processing unit. If the added content is to be made accessible for a wider part of the population, other technical solutions are necessary.

Under "www.joca.tv" a method is described, wherein additional content relating among others to current TV programs is transmitted to a mobile phone using a GPRS network. However, no detailed information is presented, how the flow of the additional data is controlled. The control of the flow of data is important, since there are inherently two conflicting objectives. On the one hand, the provider of the additional data, for example a TV channel provider, may want to influence the content to be displayed on the mobile unit of the user. On the other hand, the user of the mobile unit himself wants to keep control, whether and which data are to be displayed on the mobile unit, preferably in a somewhat similar manner as browsing on the internet.

The US 2004/0049779 A1 discloses a method of enabling a television viewer to interact with a television program. A television signal corresponding to said television program is broadcast by a television corporation whilst an information server is synchronized to the broadcast. Messages are sent from the information server to a mobile wireless terminal operated by the television viewer and/or messages are received at the information server from the wireless terminal. The sending and/or receipt of messages at the information server is synchronized with the broadcast television signal.

It is therefore the technical problem of the present invention to provide an improved method and devices for transmitting additional data relating to a TV program or the like to a mobile data processing unit without the use of a set top box, which provides the provider of the additional data and the user of the mobile unit with balanced possibilities to determine, which data are actually transmitted to the mobile unit.

### 3. Summary of the invention

According to one aspect of the invention, this problem is solved by a method of claim 1.

Accordingly, the method of the present invention does not use a single push or pull process to transmit additional data to the mobile processing unit. On the contrary, since the mobile processing unit issues periodical requests to the TCP server, changing responses of the TCP server due to changing data in the content repository will lead to new data being sent to the mobile data processing unit. The data eventually processed and displayed by the mobile processing unit may therefore be both, data requested by the user but also data which a TV channel provider wants to be received, such as an important message, which is accordingly stored in the content repository and forwarded via the TCP server in response to the next request from the mobile station. The invention therefore provides effectively a split of the control of the data sent to the mobile processing unit between the channel provider and the user.

In a preferred embodiment, at least one of the periodical requests of the mobile data processing unit as defined in claim 9 to the TCP server comprises an indication of the at least one channel provider. This is, since the content repository may contain data for the added content of more than one channel provider. Preferably, the periodical requests from the mobile data processing unit serve to synchronize at least a part of the data in the mobile data processing unit with a set of new data stored by the channel provider in the content repository. To this end, the data stored by the channel provider in the content repository comprises preferably a path indication for the TCP server indicating a path to the data to be synchronized and / or an indication whether synchronization with the mobile data processing unit is to be performed. As a result, the whole process is preferably driven by the data files stored in the content repository for the one or more channel providers.

In a presently preferred embodiment, the method comprises the further step of transmitting one or more content files from the content repository to the mobile data processing unit via an HTTP server in response to a content request from the mobile data processing unit. The address of the HTTP server for content requests is preferably sent from the TCP server to the mobile data processing unit in response to a request from the mobile data processing unit initiating a connection to the TCP server. As a result, the TCP server defines preferably the context of the additional data to be transmitted to the mobile processing unit, such as configuration data relating to a specific channel provider, whereas the HTTP server delivers content for the respective context.

According to a further aspect, the present invention relates to a mobile data processing unit comprising a transceiver unit for communication with a wireless, preferably packet oriented network, control means with instructions for the transceiver unit to periodically transmit a request to a TCP server for synchronizing data in the mobile data processing unit via the TCP server with data stored by at least one channel provider of television and / or audio broadcasts in a content repository.

The control means, preferably a kind of browser software running on the mobile processing unit, allow a user to process the additional content provided by a channel provider, without any changes to his television equipment. A set top box, in particular a set top box adapted to process additional data, is not required.

The control means further comprise instructions for transmitting a LOCK request from the mobile data processing unit to the TCP server indicating that the mobile data processing unit is not prepared to be synchronized with new data. Using the LOCK request is a further way how the user can control the flow of data to his mobile processing unit, for example to finish a certain application, before new content is displayed.

Finally, the present invention relates to a system for transmitting data to a mobile data processing unit as defined in independent claim 14, in particular for performing any of the above described methods, comprising a content repository with data relating to television and / or audio broadcasts of at least one channel provider, a TCP server transmitting data from the content repository to the mobile data processing unit via a wireless network, wherein the TCP server is adapted to transmit the data to the mobile data processing unit in response to receiving periodical requests from the mobile data processing unit.

Further preferred embodiments of the method, the mobile processing unit and the system are the subject matter of further dependent claims.

### 4. Short description of the drawing

In the following detailed description presently preferred embodiments of the invention are described with reference to the drawing which shows:

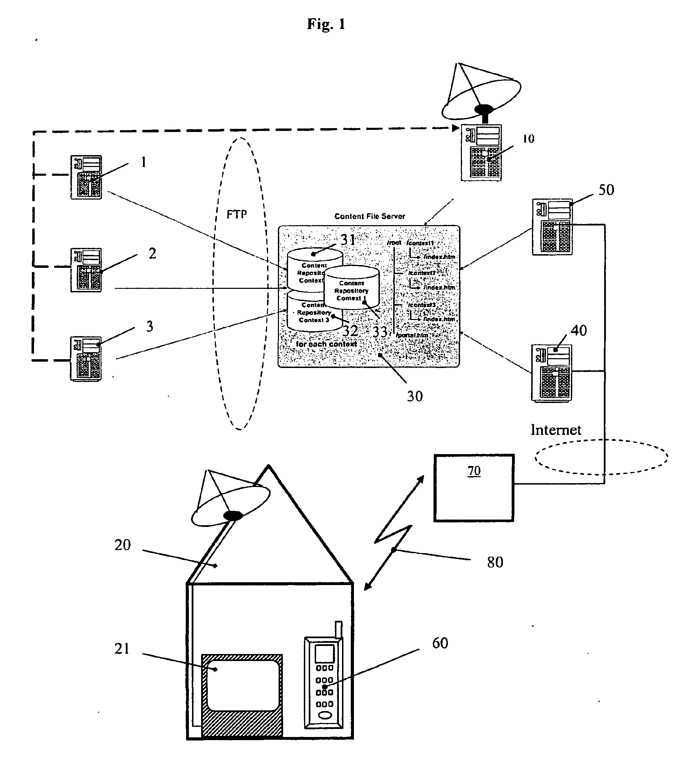

Fig. 1: A schematic overview of a system in accordance with a presently preferred embodiment of the invention.

### 5. Detailed description of preferred embodiments

Fig. 1 presents a schematic overview of a system in accordance with a presently preferred embodiment. As can be seen, there are three TV channel providers 1, 2, 3, which are compiling programs to be broadcast. As indicated by the dashed line in Fig. 1, the programs are forwarded to a common playout center or head end 10, which broadcasts the received programs via a satellite (not shown). The various TV channel providers 1, 2 and 3 may use more than one playout center for the broadcast of their programs. Further, alternatively to broadcasting via a satellite, the TV channel providers may use a cable network (not shown) or a terrestrial broadcasting system (not shown), all of which may broadcast TV programs either in a digital or analog manner. A user in his home 20 can receive the programs with a suitable television set 21, which may or may not include a set top box (not shown).

In addition to compiling the TV programs, the TV channel providers 1, 2, 3 are preparing data files for additional content to be displayed on a mobile processing unit 60 together with broadcasting a certain TV program. The data files are for example in XML or HTML format and are sent to a content repository 30, which preferably comprises one or more file servers. As indicated in Fig. 1, the data files may be transferred to the content repository 30 using a conventional data link, for example over the Internet using the FTP protocol. The data files of the various TV channel providers 1, 2, 3 are preferably stored in separate sections 31, 32, 33 of the content repository 30, as schematically indicated in Fig. 1.

Preferably, each channel provider 1, 2, 3 can only access its own section 31, 32, 33 of the content repository 30 for updating the stored data files. Fig. 1 shows an exemplary tree structure for arranging the data files in HTML format in the content repository 30. However, alternative ways of arranging the data files, for example without a common root, are also conceivable. Further, there may be a plurality of content repositories, for example one for each TV channel provider.

In the preferred embodiment schematically shown in Fig. 1 two servers are provided, namely the TCP server 40 and the HTTP server 50, which are used to transmit the data files from the content repository 30 to a mobile processing unit 60 of a user. In the following the TCP server 40 and its service will at first be described before the function of the HTTP server 50 is further discussed.

The TCP server 40 is responsible to keep the mobile processing unit 60 synchronized with data in the content repository 30. To this end, it is connected to the Internet and thereby via a gateway 70 to a wireless communication network 80 following for example the GPRS or the UMTS standard. The service provided by the TCP server 40 is driven by the content updates triggered by the respective TV channel provider 1, 2, 3 on the one hand and the current request of each connected mobile processing unit 60 on the other hand. Since there might be a very large number of mobile processing units 60 simultaneously connected as clients, the TCP server 40 is preferably able to handle a great amount of parallel connections using well-known IP techniques such as multicast. This is particular important in case of a so-called hot synchronization, i.e. an update of a certain page, which is to be transmitted to all connected mobile processing units (for example 100000) in a short time.

In general, the communication between the TCP server 40 and each connected mobile processing unit 60 is similar to the communication between a set top box and a mobile processing unit as described in the co-pending PCT-application PCT/EP2005/010961 of applicant of the present application.

The Interface Protocol between the TCP server 40 and the connected mobile processing unit 60 is preferably based on the XML file format. In order to keep the amount of protocol data as small as possible, it is recommended to use the XML short-form for building the XML protocol. To set up a connection between the connected mobile processing unit 60 and the TCP server 40, the mobile processing unit 60 needs to be connected to the Internet. This can be achieved by using the gateway 70 of a preferably packet-oriented wireless communication network 80, like the GPRS or UMTS network mentioned above. At first, a communication software of the connected mobile processing unit 60, the "browser", is started. After launching the browser, it verifies whether the network connection 80 of the mobile processing unit 60 is enabled and ready. If not, the browser will advice the user how to get connected to the network 80 and thereby to the gateway 70. Further, if the mobile processing unit has already another TCP connection running, this connection is preferably terminated before connecting to the TCP server 40.

In one embodiment, the browser has a built-in URL, which identifies how the communication is initialized. This link may differ from browser to browser. The link codes access to the HTTP-server 50 (or another server) which delivers an initial HTM-file "portal.htm", as schematically shown in Fig. 1. This data file of the content repository is outside of any specific context, i.e. it is not related to any specific TV channel providers. The initial Portal Page comprises one or more links that allow the user the selection and the synchronization with different contexts, i.e. one of the TV-channel providers 1, 2 or 3.

In a next step, the browser tries to set up a connection to the TCP server 40. Depending on its configuration, it might be necessary to enter an authentication id (PIN) to get connected. After successfully connecting to the TCP server 40, the browser preferably sends an initial request to the TCP server 40, which preferably includes and identification of the context, i.e. the specific TV channel provider, the additional content of which the user wants to receive. Additionally, there might be an authentication step, wherein a copyright string sent from the mobile processing unit 60 is compared with a stored counterpart on the side of the TCP server 40. The copyright string is a static text string that can be defined by the system provider.

After successful connection, the TCP server 40 sends one or more-configuration parameters to the mobile processing unit 60, including the address of the HTTP server 50 for future content requests from the mobile processing unit 60, which are discussed further below. Each TCP service provided by the TCP server 40 knows its HTTP content server 50 by configuration.

Once a connection between the mobile processing unit 60 and the TCP server 40 has been established, the operation of the TCP service provided by the server 40 is triggered by two sides: On the one side, there is the browser that sends a REFRESH, SYNC or LOCK command as described below. On the other side, there are the data files in the content repository that are updated at any time by the TV channel provider. The overall process is preferably as follows:
Besides the content files, the TV channel provider supplies preferably a control file that carries two control parameters for the TCP-Service: the SyncPagePath and an indicator whether a synchronization is forced (for a so called Hot-Page) or not. The TV channel provider may initiate the update of the content and / or any control file, by sending an additional (empty) trigger file to the content repository 30. The TCP-Service of the server 40 tracks the presence of this trigger file. As soon as the trigger file appears, the service evaluates updates of the content for every connected browser based on the following requests previously received from the respective mobile processing station 60:

### LOCK

If a browser has sent a LOCK-Request, it is not interested in any update so no response has to be generated by the TCP-Service.

### SYNC

With the SYNC-Request, the browser informs the TCP-Service about his last known page for synchronization, which may be different from the page currently displayed. If a content update is triggered, the TCP service of the server 40 checks whether the synchronization page is still correct by evaluating the SyncPagePath which is indicated within the control file. If the SyncPagePath is different from the one of the synchronization page previously requested by the browser, the service generates a so-called SyncResponse and informs the browser about the correct synchronization page indicated in the recently updated control file. If the SyncPagePath is equal, the service evaluates if the synchronization page was updated from the TV channel provider by comparing the page version known by the browser with the version present in the content repository. If the two version numbers are different, the service informs the browser that the synchronization page was updated.

### REFRESH

With the REFRESH-Request, the browser informs the TCP-server about its last known synchronization page and the actually displayed page, which may differ. If a content update is triggered, the service of the TCP server 40 checks whether the synchronization page is still correct by evaluating the SyncPagePath within the control file. If the SyncPagePath is different and a so-called force parameter in the control file is set, the service generates a RefreshResponse and informs the browser about the (Hot) synchronization page that needs to be displayed. If the SyncPagePath is equal or the force parameter is not set, the service compares the page version of the currently displayed page indicated by the browser with one present in the content repository. If different, the service informs the browser that the page was updated.

In general, if a content update was triggered but no condition was met that generated a response, the service of the TCP server 40 waits for the next content update in the content repository 30. If a response was generated, the service of the TCP server 40 waits for the next browser request. As soon as all browser connections have been served, the trigger file is deleted by the TCP-server. If several TCP-servers look at the same content repository, e.g. for load balancing reasons, the deletion of the trigger-file needs be a synchronized action.

In the following the content retrieval of the browser using the HTTP server 50 is further described:

The HTTP-server 50 is responsible to deliver content from the content repository 30 if requested by a mobile processing unit 60. The HTTP-server 50 is connected to the Internet and listens to HTTP-Requests, which are in the correct protocol. A single HTTP-server 50 can have access to and deliver content from several content repositories 30. Further, similar to the TCP server, the HTTP-server is able to deliver content to all clients (e.g. 100000) in a given context in short time. Again, this can be achieved by techniques such as load balancing on a hard- or software basis and IP techniques such as multicast.

Content is requested via a GetCommand from an HTTP-server, which is similar to the GetCommand described in the above mentioned co-pending PCT application of applicant. However, the command is extended, wherein the extension allows the delivery of multiple files. The HTTP-server 50 that delivers the content is either identified by an initial, built-in URL in the browser or - if the user already decided to enter a specific context - the URL delivered during setup of the TCP-connection.

With every GetRequest, the browser of the mobile processing unit 60 preferably also sends the context, i.e. the TV provider channel, the additional content of which is requested. The HTTP-server 50 determines the requested file(s) by resolving the paths based on the context information and its configuration, so that the files are picked from the correct section of the content repository 30. For files, which are not connected to a specific context (for example an initial HTML-page), the HTTP-server supports also a "no context" specific path.

The service of the HTTP server 50 only delivers files that are triggered as updated by the provider to ensure consistency of the content repository and the TCP Service Logic. In one embodiment this is achieved as follows: As soon as the TCP-Service detects the presence of an update trigger file, it writes/updates an empty content trigger file. For every requested file, the HTTP-server 50 compares the timestamp of the file (this is the file version...) with the one of the content trigger file. If the requested file is younger than the content trigger, the file is not delivered because the provider has not yet triggered the update. The HTTP-service answers the browser's request with a result code "data not yet available" instead of delivering the file.

The data sent from the HTTP 50 server to the mobile processing unit 60 are pref erably in encrypted form in order to avoid the reception by non-intended third parties.

Finally, each mobile processing unit 60 has preferably a built-in timeout for active connections which is normally a few minutes. To keep a TCP-connection alive, the TCP-server 40 sends a few bytes conforming to the specific protocol every minute to each connected browser. If the TCP-server 40 is too busy to send these bytes, the browser may close the connection.

The method and system described in the present application might be combined with the method and system for transmitting data to a mobile data processing unit described in the above mentioned PCT-application PCT/EP2005/010961 of applicant of the present application. As can be seen in Fig. 1, there is preferably a connection between the head end 10 and the content repository 30. Accordingly, the head end 10 can obtain the additional content in the content repository 30 to create a convoluted signal comprising digital television and / or audio signals combined with the additional content, which can then be retrieved by a set top box (not shown) and forwarded to a mobile processing unit 60 using the techniques described in the above mentioned co-pending application of applicant. As a result, two transport mechanisms can alternatively or simultaneously be used to transmit the additional content to the mobile processing unit 60 of a user, who may receive the additional data-either from a suitably adapted set-top box or directly over-the - air, i.e. using the servers 40 and 50, the Internet and the wireless network 80.

## Claims

1. A method for transmitting data *relating to television and* / *or audio broadcasts of at least one channel provider (1,2,3)* to a mobile data processing unit (60), the method comprising the following steps:
a. providing a content repository (30) comprising *said* data;
b. transmitting *said* data from the content repository (30) to the mobile data processing unit (60) via a TCP Server (40) and a wireless network (80);
c. wherein *said* data are transmitted from the TCP server (40) to the mobile data processing unit (60) in response to periodical requests from the mobile data processing unit (60) to the TCP server (40) ***characterized in that***
*d) the method further comprises the step of transmitting a LOCK request from the mobile data processing unit (60) to the TCP server (40) indicating that the mobile data processing unit is not prepared to be synchronized with new data.*

2. Method according to claim 1, wherein at least one of the periodical requests of the mobile data processing unit (60) to the TCP server (40) comprises an indication of the at least one channel provider (1,2,3).

3. Method according to claim 1 or 2, wherein the periodical requests from the mobile data processing unit (60) serve to synchronize at least a part of the data in the mobile data processing unit (60) with a set of new data stored by the channel provider (1,2,3) in the content repository (30).

4. Method of claim 3, wherein the data stored by the channel provider (1,2,3) in the content repository (30) comprises a path indication for the TCP server (40) indicating a path to the data to be synchronized and / or an indication whether a synchronization with the mobile data processing unit (60) is to be performed.

5. Method of claim 4, wherein the TCP server (40) performs a synchronization in response to detecting a trigger file in the content repository (30).

6. Method according to any of the preceding claims further comprising the step of transmitting one or more content files from the content repository (30) to the mobile data processing unit (60) via an HTTP server (50) in response to a content request from the mobile data processing unit (60).

7. Method according to claim 6, wherein the address of the HTTP server (50) for content requests is sent from the TCP server (40) to the mobile data processing unit (60) in response to a request from the mobile data processing unit (60) initiating a connection to the TCP server (40).

8. Method according to any of the preceding claims 6 or 7 further comprising the steps of providing *the HTTP server (50) with a file with* one or more links to one or more TCP servers (40) capable of receiving periodic requests for obtaining *said* data from the content repository (30).

9. A mobile data processing unit (60) comprising:
a. a transceiver unit for communication with a wireless, preferably packet oriented network (80);
b. control means with instructions for the transceiver unit to periodically transmit a request to a TCP server (40) for synchronizing data in the mobile data processing unit (60) via the TCP server (40) with data stored by at least one channel provider (1,2,3) of television and / or audio broadcasts in a content repository (30), ***characterized in that***
*c. the control means further comprise instructions for transmitting a LOCK request from the mobile data processing unit to the TCP server (40) indicating that the mobile data processing unit (60) is not prepared to be synchronized with new data.*

10. Mobile data processing unit (60) of claim 9, the control means being further adapted to indicate the channel provider (1,2,3) in at least one of the periodical requests.

11. Mobile data processing unit (60) of claim 9 or 10, the control means being further adapted to receive a value for the refresh interval between subsequent periodical requests as part of the synchronizing data.

12. Mobile data processing unit (60) according to any of the claims 9 - 11, wherein the control means comprise instructions to asynchronously issue additional content requests at an HTTP server (50) connected to the content repository (30).

13. Mobile data processing unit (60) according to claim 12, the control means being further adapted to receive the address of the HTTP server (50) for content requests from the TCP server (40) in response to a request from the mobile data processing unit (60) initiating a connection to the TCP server (40).

14. A system for transmitting data *relating to television and* / *or audio broadcasts of at least one channel provider (1,2,3)* to a mobile data processing unit (60), in particular for performing a method of any of the claims 1-9, comprising:
a. a content repository (30) comprising *said* data;
b. a TCP server (40) transmitting *said* data from the content repository to the mobile data processing unit (60) via a wireless network (80),
c. wherein the TCP Server (40) is adapted to transmit *said* data to the mobile data processing unit (60) in response to receiving periodical requests from the mobile data processing unit (60), ***characterized in that***
*d) the TCP server (40) is further adapted to receive a LOCK request from the mobile data processing unit (60) indicating that the mobile data processing unit is not prepared to be synchronized with new data.*

15. The system of claim 14, wherein the data stored by the channel provider in the content repository (30) comprises a path indication for the TCP server (40) indicating a path to the data to be synchronized and / or an indication whether a synchronization with the mobile data processing unit (60) is to be performed.

16. The system of claim 14 or 15, further comprising a trigger file in the content repository indicating for the TCP server to perform a synchronization in response.

17. The system of any of the preceding claims 14 - 16 further comprising an HTTP server (50) adapted to transmit one or more content files from the content repository (30) to the mobile data processing unit (60) in response to a content request from the mobile data processing unit (60).

18. The system of claim 17, wherein the TCP server (40) stores the address of the HTTP server (50) and wherein the TCP server (40) is adapted to send the address to the mobile data processing unit (60) in response to a request from the mobile data processing unit (60) initiating a connection to the TCP server (40).

## Patentansprüche

1. Ein Verfahren zum Übertragen von Daten, das sich auf Fernseh- und/oder Hörfunkausstrahlungen von wenigstens einem Kanalanbieter (1, 2, 3) zu einer mobilen Datenverarbeitungseinheit (60) bezieht, wobei das Verfahren die folgenden Schritte umfasst:
a. Bereitstellen einer Inhaltsablage (30) aufweisend die Daten;
b. Übertragen der Daten von der Inhaltsablage (30) zu einer mobilen Datenverarbeitungseinheit (60) über einen TCP Server (40) und ein drahtloses Netzwerk (80);
c. wobei die Daten von dem TCP Server (40) zu der mobilen Datenverarbeitungseinheit (60) übertragen werden in Antwort auf periodische Abfragen der mobilen Datenverarbeitungseinheit (60) an den TCP Server (40) **dadurch gekennzeichnet dass**
d. das Verfahren weiterhin aufweist den Schritt des Übertragens einer LOCK Abfrage von der mobilen Datenverarbeitungseinheit (60) an den TCP Server (40), die anzeigt, dass die mobile Datenverarbeitungseinheit nicht bereit ist mit neuen Daten synchronisiert zu werden.

2. Verfahren nach Anspruch 1, wobei wenigstens eine der periodischen Abfragen der mobilen Datenverarbeitungseinheit (60) an den TCP Server (40) eine Anzeige des wenigstens einen Kanalanbieters (1, 2, 3) aufweist.

3. Verfahren nach Anspruch 1 oder 2, wobei die periodische Abfragen von der mobilen Datenverarbeitungseinheit (60) zum Synchronisieren von wenigstens einem Teil der Daten in der mobilen Datenverarbeitungseinheit (60) mit einem Satz von neuen Daten dienen, der von dem Kanalanbieter (1, 2, 3) in der Inhaltsablage (30) gespeichert ist.

4. Verfahren nach Anspruch 3, wobei die Daten, die von dem Kanalanbieter (1, 2, 3) in der Inhaltsablage (30) gespeichert sind eine Pfadanzeige für den TCP Server (40) aufweisen, die einen Pfad zu den Daten anzeigt, die synchronisiert werden sollen und/oder eine Anzeige, ob eine Synchronisation mit der mobilen Datenverarbeitungseinheit (60) durchgeführt werden soll.

5. Verfahren nach Anspruch 4, wobei der TCP Server (40) eine Synchronisation durchführt in Antwort auf das Detektieren einer Triggerdatei in der Inhaltsablage (30).

6. Verfahren nach einem der vorangehenden Ansprüche weiterhin aufweisend den Schritt des Übertragens einer oder mehrerer Inhaltsdateien aus der Inhaltsablage (30) zu der mobilen Datenverarbeitungseinheit (60) über einen HTTP Server (50) in Antwort auf eine Inhaltsabfrage von der mobilen Datenverarbeitungseinheit (60).

7. Verfahren nach Anspruch 6, wobei die Adresse des HTTP Servers (50) für Inhaltsabfragen von dem TCP Server (40) an die mobile Datenverarbeitungseinheit (60) gesendet wird in Antwort auf eine Abfrage von der mobilen Datenverarbeitungseinheit (60), die eine Verbindung zu dem TCP Server (40) initiiert.

8. Verfahren nach einem der vorangehenden Ansprüche 6 oder 7 weiterhin aufweisend die Schritte des Bereitstellens einer Datei für den HTTP Server (50) mit einem oder mehreren Verweisen auf einen oder mehrere TCP Server (40), die in der Lage sind periodische Abfragen zu empfangen, zum Erhalten der Daten von der Inhaltsablage (30).

9. Eine mobile Datenverarbeitungseinheit (60) aufweisend:
a. eine Transceiver-Einheit zur Kommunikation mit einem drahtlosen, vorzugsweise paketorientierten Netzwerk (80);
b. Steuerungsmittel mit Anweisungen für die Transceiver-Einheit zum periodischen Übertragen einer Abfrage an einen TCP Server (40) zum Synchronisieren von Daten in der mobilen Datenverarbeitungseinheit (60) über den TCP Server (40) mit Daten, die von wenigstens einem Kanalanbieter (1, 2, 3) von Fernseh- und/oder Hörfunkausstrahlungen in einer Inhaltsablage (30) gespeichert sind, **dadurch gekennzeichnet dass**
c. die Steuerungsmittel weiterhin Anweisungen aufweisen zum Übertragen einer LOCK Abfrage von der mobilen Datenverarbeitungseinheit an den TCP Server (40), die anzeigt, dass die mobile Datenverarbeitungseinheit (60) nicht bereit ist mit neuen Daten synchronisiert zu werden.

10. Mobile Datenverarbeitungseinheit (60) nach Anspruch 9, wobei die Steuerungsmittel weiter angepasst sind den Kanalanbieter (1, 2, 3) in wenigstens einer der periodischen Abfragen anzuzeigen.

11. Mobile Datenverarbeitungseinheit (60) nach Anspruch 9 oder 10, wobei die Steuerungsmittel weiterhin angepasst sind einen Wert für das Auffrischintervall zwischen aufeinanderfolgenden periodischen Abfragen als Teil der synchronisierenden Daten zu empfangen.

12. Mobile Datenverarbeitungseinheit (60) nach einem der Ansprüche 9-11, wobei die Steuerungsmittel Anweisungen umfassen zum asynchronen Ausgeben zusätzlicher Inhaltsabfragen an einen HTTP Server (50), der mit der Inhaltsablage (30) verbunden ist.

13. Mobile Datenverarbeitungseinheit (60) nach Anspruch 12, wobei die Steuerungsmittel weiterhin angepasst sind, um die Adresse des HTTP Servers (50) für Inhaltsabfragen von dem TCP Server (40) zu empfangen in Antwort auf eine Abfrage der mobilen Datenverarbeitungseinheit (60), die eine Verbindung zu einem TCP Server (40) initiiert.

14. Ein System zum Übertragen von Daten, das sich auf Fernseh- und/oder Hörfunkausstrahlungen von wenigstens einem Kanalanbieter (1, 2, 3) zu einer mobilen Datenverarbeitungseinheit (60) bezieht, insbesondere zum Durchführen eines Verfahrens nach einem der Ansprüche 1 - 9, aufweisend:
a. eine Inhaltsablage (30) umfassend die Daten;
b. einen TCP Server (40) zum Übertragen der Daten von der Inhaltsablage zu einer mobilen Datenverarbeitungseinheit (60) über ein drahtloses Netzwerk (80),
c. wobei der TCP Server (40) angepasst ist zum Übertragen der Daten zu einer mobilen Datenverarbeitungseinheit (60) in Antwort auf das Empfangen periodischer Abfragen von der mobilen Datenverarbeitungseinheit (60), **dadurch gekennzeichnet dass**
d. der TCP Server (40) weiterhin angepasst ist, zum Empfangen einer LOCK Anfrage von der mobilen Datenverarbeitungseinheit (60), die anzeigt, dass die mobile Datenverarbeitungseinheit nicht bereit ist mit neuen Daten synchronisiert zu werden.

15. System nach Anspruch 14, wobei die Daten, die von dem Kanalanbieter in der Inhaltsablage (30) gespeichert sind eine Pfadanzeige für den TCP Server (40) aufweisen, die einen Pfad zu den Daten, die synchronisiert werden sollen, anzeigt und/oder eine Anzeige, ob eine Synchronisation mit der mobilen Datenverarbeitungseinheit (60) durchgeführt werden soll.

16. Verfahren nach Anspruch 14 oder 15, weiterhin aufweisend eine Triggerdatei in der Inhaltsablage, die dem TCP Server anzeigt eine Synchronisation als Antwort durchzuführen.

17. System nach einem der Ansprüche 14 - 16, weiterhin aufweisend einen HTTP Server (50), der angepasst ist, eine oder mehrere Inhaltsdateien aus der Inhaltsablage (30) zu der mobilen Datenverarbeitungseinheit (60) zu übertragen, in Antwort auf eine Inhaltsabfrage der mobilen Datenverarbeitungseinheit (60).

18. System nach Anspruch 17, wobei der TCP Server (40) die Adresse des HTTP Servers (50) speichert und wobei der TCP Server (40) angepasst ist, um die Adresse zu der mobilen Datenverarbeitungseinheit (60) zu schicken in Antwort auf eine Abfrage der mobilen Datenverarbeitungseinheit (60), die eine Verbindung zu dem TCP Server (40) initiiert.

## Revendications

1. Procédé d'émission de données relatives à des télédiffusions et/ou des radiodiffusions d'au moins un fournisseur de chaînes (1, 2, 3) vers une unité mobile de traitement de données (60), le procédé comprenant les étapes suivantes consistant à :
a. fournir un référentiel de contenu (30) comprenant lesdites données ;
b. émettre lesdites données depuis le référentiel de contenu (30) vers l'unité mobile de traitement de données (60) par le biais d'un serveur TCP (40) et d'un réseau sans fil (80) ;
c. dans lequel lesdites données sont émises depuis le serveur TCP (40) vers l'unité mobile de traitement de données (60) en réponse à des demandes périodiques provenant de l'unité mobile de traitement de données (60) vers le serveur TCP (40), **caractérisé en ce que**
d. le procédé comprend en outre l'étape consistant à émettre une demande VERROUILLAGE depuis l'unité mobile de traitement de données (60) vers le serveur TCP (40) indiquant que l'unité mobile de traitement de données n'est pas préparée à être synchronisée avec de nouvelles données.

2. Procédé selon la revendication 1, dans lequel au moins l'une des demandes périodiques de l'unité mobile de traitement de données (60) vers le serveur TCP (40) comprend une indication du au moins un fournisseur de chaînes (1, 2, 3).

3. Procédé selon la revendication 1 ou 2, dans lequel les demandes périodiques provenant de l'unité mobile de traitement de données (60) servent à synchroniser au moins une partie des données dans l'unité mobile de traitement de données (60) avec un ensemble de nouvelles données stockées par le fournisseur de chaînes (1, 2, 3) dans le référentiel de contenu (30).

4. Procédé selon la revendication 3, dans lequel les données stockées par le fournisseur de chaînes (1, 2, 3) dans le référentiel de contenu (30) comprennent une indication de chemin d'accès pour le serveur TCP (40) indiquant un chemin d'accès vers les données à synchroniser et/ou une indication du fait qu'une synchronisation avec l'unité mobile de traitement de données (60) va être effectuée ou non.

5. Procédé selon la revendication 4, dans lequel le serveur TCP (40) effectue une synchronisation en réponse à la détection d'un fichier de déclenchement dans le référentiel de contenu (30).

6. Procédé selon l'une quelconque des revendications précédentes, comprenant en outre l'étape consistant à émettre un ou plusieurs fichiers de contenu depuis le référentiel de contenu (30) vers l'unité mobile de traitement de données (60) par le biais d'un serveur HTTP (50) en réponse à une demande de contenu provenant de l'unité mobile de traitement de données (60).

7. Procédé selon la revendication 6, dans lequel l'adresse du serveur HTTP (50) pour des demandes de contenu est envoyée depuis le serveur TCP (40) vers l'unité mobile de traitement de données (60) en réponse à une demande provenant de l'unité mobile de traitement de données (60) initiant une connexion au serveur TCP (40).

8. Procédé selon l'une quelconque des revendications 6 ou 7 précédentes, comprenant en outre les étapes consistant à fournir au serveur HTTP (50) un fichier avec un ou plusieurs liens vers un ou plusieurs serveurs TCP (40) capables de recevoir des demandes périodiques pour obtenir lesdites données à partir du référentiel de contenu (30).

9. Unité mobile de traitement de données (60) comprenant :
a. une unité formant émetteur-récepteur pour une communication avec un réseau sans fil, de préférence orienté paquets (80) ;
b. un moyen de commande disposant d'instructions pour que l'unité formant émetteur-récepteur émette périodiquement une demande vers un serveur TCP (40) pour synchroniser des données dans l'unité mobile de traitement de données (60) par le biais du serveur TCP (40) avec des données stockées par au moins un fournisseur de chaînes (1, 2, 3) de télédiffusion et/ou de radiodiffusion dans un référentiel de contenu (30), **caractérisé en ce que**
c. le moyen de commande comprend en outre des instructions pour émettre une demande VERROUILLAGE depuis l'unité mobile de traitement de données vers le serveur TCP (40) indiquant que l'unité mobile de traitement de données (60) n'est pas préparée à être synchronisée avec de nouvelles données.

10. Unité mobile de traitement de données (60) selon la revendication 9, le moyen de commande étant en outre adapté pour indiquer le fournisseur de chaînes (1, 2, 3) dans au moins une parmi les demandes périodiques.

11. Unité mobile de traitement de données (60) selon la revendication 9 ou 10, le moyen de commande étant en outre adapté pour recevoir une valeur pour l'intervalle de rafraîchissement entre des demandes périodiques consécutives, composant en partie les données de synchronisation.

12. Unité mobile de traitement de données (60) selon l'une quelconque des revendications 9 à 11, dans laquelle le moyen de commande comprend des instructions pour délivrer de manière asynchrone des demandes de contenu additionnel au niveau d'un serveur HTTP (50) connecté au référentiel de contenu (30).

13. Unité mobile de traitement de données (60) selon la revendication 12, le moyen de commande étant en outre adapté pour recevoir l'adresse du serveur HTTP (50) pour des demandes de contenu depuis le serveur TCP (40) en réponse à une demande provenant de l'unité mobile de traitement de données (60) initiant une connexion au serveur TCP (40).

14. Système destiné à émettre des données concernant des télédiffusions et/ou des radiodiffusions d'au moins un fournisseur de chaînes (1, 2, 3) vers une unité mobile de traitement de données (60), en particulier destiné à effectuer un procédé selon l'une quelconque des revendications 1 à 9, comprenant :
a. un référentiel de contenu (30) comprenant lesdites données ;
b. un serveur TCP (40) émettant lesdites données depuis le référentiel de contenu vers l'unité mobile de traitement de données (60) par le biais d'un réseau sans fil (30).
c. dans lequel le serveur TCP (40) est adapté pour émettre lesdites données vers l'unité mobile de traitement de données (60) en réponse à la réception de demandes périodiques depuis l'unité mobile de traitement de données (60), **caractérisé en ce que**
d. le serveur TCP (40) est en outre adapté pour recevoir une demande VERROUILLAGE depuis l'unité mobile de traitement de données (60) indiquant que l'unité mobile de traitement de données n'est pas préparée à être synchronisée avec de nouvelles données

15. Système selon la revendication 14, dans lequel les données stockées par le fournisseur de chaînes dans le référentiel de contenu (30) comprennent une indication de chemin d'accès pour le serveur TCP (40) indiquant un chemin d'accès vers les données à synchroniser et/ou une indication du fait qu'une synchronisation avec l'unité mobile de traitement de données (60) va être effectuée ou non.

16. Système selon la revendication 14 ou 15, comprenant en outre un fichier de déclenchement dans le référentiel de contenu indiquant au serveur TCP d'effectuer une synchronisation en réponse.

17. Système selon l'une quelconque des revendications 14 à 16 précédentes, comprenant en outre un serveur HTTP (50) adapté afin d'émettre un ou plusieurs fichiers de contenu depuis le référentiel de contenu (30) vers l'unité mobile de traitement de données (60) en réponse à une demande de contenu provenant de l'unité mobile de traitement de données (60).

18. Système selon la revendication 17, dans lequel le serveur TCP (40) stocke l'adresse du serveur HTTP (50) et dans lequel le serveur TCP (40) est adapté afin d'envoyer l'adresse vers l'unité mobile de traitement de données (60) en réponse à une demande provenant de l'unité mobile de traitement de données (60) initiant une connexion au serveur TCP (40).
